(19) Europäisches Patentamt
European Patent Office
Office européen des brevets

(11) Veröffentlichungsnummer: **0 003 044**
**B1**

(12) # EUROPÄISCHE PATENTSCHRIFT

(45) Veröffentlichungstag der Patentschrift: **05.08.81**

(51) Int. Cl.³: **C 03 C 27/06**, C 08 L 83/04, B 32 B 17/10

(21) Anmeldenummer: **78101841.1**

(22) Anmeldetag: **23.12.78**

(54) **Schichtkörper und Verfahren zu ihrer Herstellung.**

(30) Priorität: **07.01.78 DE 2800652**

(43) Veröffentlichungstag der Anmeldung: **25.07.79 Patentblatt 79/15**

(45) Bekanntmachung des Hinweises auf die Patenterteilung: **05.08.81 Patentblatt 81/31**

(84) Benannte Vertragsstaaten: **BE DE FR GB NL**

(56) Entgegenhaltungen:
**FR-A-1 430 631**
**FR-A-2 307 860**
**GB-A-1 188 058**
**US-A-2 760 893**
**US-A-3 312 574**
**US-A-3 996 195**

(73) Patentinhaber: **BAYER AG, Zentralbereich Patente, Marken und Lizenzen, D-5090 Leverkusen 1, Bayerwerk (DE)**

(72) Erfinder: **Herzig, Joachim, Dr., Am Weiher 14, D-5653 Leichlingen 2 (DE)**

EP 0 003 044 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Schichtkörper und Verfahren zu ihrer Herstellung

Die vorliegende Erfindung betrifft optisch durchlässige Schichtkörper, die durch eine oder mehrere Zwischenschichten aus optisch durchlässigen und durch mit Platin katalysierter Additionsreaktion hergestelltem Organopolysiloxan verbunden sind, und ein Verfahren zu ihrer Herstellung.

Gängige Werkstoffe für Schichtkörper sind z.B. Glas, Polycarbonate, Polyamide oder Polymethacrylsäureester. Zur Erzielung bestimmter Eigenschaften werden die Schichtkörper aus einem Werkstoff oder durch Kombination mehrerer Werkstoffe hergestellt. Der sich zwischen den plattenförmigen Materialien befindende Zwischenraum kann in verschiedener Weise ausgefüllt werden. So ist es z.B. möglich, in den Zwischenraum ein Gas, im einfachsten Falle Luft, einzubringen, des weiteren können Folien aus Polycarbonaten, teilacetalisierten Polyvinylalkoholen, Polyvinylbutyraten, Polycarbonatsiloxancopolymeren oder Äthylenvinylacetatcopolymeren verwendet werden. Ferner wurde bereits die Verwendung von kondensationsvernetzenden Organopolysiloxanen (DE-OS 1 955 514, DE-OS 2 239 404) und additionsvernetzenden Organopolysiloxanen (DE-OS 1 940 124) vorgeschlagen.

Es ist bekannt, Schichtkörper, die aus zwei durchsichtigen plattenförmigen Materialien, die parallel zueinander in einem bestimmten Abstand angeordnet sind, mit einer Zwischenschicht aus elastischen Organopolysiloxanen herzustellen. Diese werden in giessfähiger Konsistenz zwischen die beiden plattenförmigen Materialien gebracht und härten in situ durch geeignete Vernetzersubstanzen oder Polymerisationskatalysatoren zu einer elastischen Zwischenschicht aus. Für diesen Zweck wurden sowohl kondensationsvernetzende Systeme (DE-OS 2 239 404, DE-OS 1 955 514) als auch additionsvernetzende Systeme (DE-OS 1 940 124) vorgeschlagen. Bei allen bekannten Methoden ist das Problem der genügenden Haftung an den plattenförmigen Materialien, insbesondere bei Polycarbonaten, Polyamiden oder Polymethacrylsäureestern, verbunden mit optischer Fehlerfreiheit, nicht zufriedenstellend gelöst. Werden für die elastische Zwischenschicht kondensationsvernetzende Systeme verwendet, so bewirken die Spaltprodukte, die während des Härtungsvorganges freigesetzt werden, erhebliche Schwierigkeiten. Ferner treten Trübungen oder Spannungsrisskorrosionen an der Oberfläche von Polycarbonaten, Polyamiden oder Polymethacrylsäureestern sowie eine ungleichmässige Vulkanisation oder Schwunderscheinungen auf, die durch überschüssig verwendete Vernetzersubstanz hervorgerufen werden.

Die Funktionen derartiger Schichtkörper sind vielfältig und umfassen z.B. Schalldämmung, Wärmeisolierung, Brandeindämmung, Schutz gegen mechanische Beanspruchung, wie z.B. Schlag- oder Schussbeanspruchung, oder auch die dekorative Gestaltung von Räumen. Eine weitere Forderung besteht darin, dass die Schichtkörper ein relativ geringes Gewicht aufweisen sollen. Es besteht daher ein Bedarf an solchen Schichtkörpern, die eine gute optische Durchlässigkeit bei gleichzeitiger guter Schalldämmung und Wärmeisolierung, verbunden mit hervorragender Beständigkeit gegen Durchschlagen und Absplittern, aufweisen. Wesentlich ist ferner die Forderung nach schlechter Brennbarkeit, leichtem Gewicht und einfacher Herstellungsweise.

Eine der Aufgaben der vorliegenden Erfindung besteht deshalb darin, Schichtkörper zu schaffen, welche die genannten Forderungen erfüllen. Gegenstand der vorliegenden Erfindung sind deshalb optisch durchlässige Schichtkörper, die durch eine oder mehrere Zwischenschichten aus Organopolysiloxanen verbunden sind, welche dadurch gekennzeichnet sind, dass die Zwischenschicht aus einem optisch durchlässigen und durch mit Platin katalysierter Additionsreaktion hergestelltem Organopolysiloxan besteht.

Im Sinne der vorliegenden Erfindung wird unter optisch durchlässig sowohl durchsichtig als auch durchscheinend verstanden. Ferner schliesst plattenförmig im Sinne der Erfindung auch gewinkelte und gebogene, flächenförmige Materialien ein. Vorzugsweise sind diese Materialien durchsichtig und parallel zueinander in einem gewünschten Abstand angeordnet.

Das Organopolysiloxan wird durch Reaktion eines aliphatisch ungesättigte Gruppen enthaltenden Organopolysiloxans mit einem siliciumgebundene Wasserstoffatome enthaltenden Organopolysiloxan unter dem katalytischen Einfluss einer Platin-Verbindung gebildet, und der Vulkanisationsgrad wird über das stöchiometrische Verhältnis des aliphatisch ungesättigte Gruppen enthaltenden Organopolysiloxans zu dem siliciumgebundene Wasserstoffatome enthaltenden Organopolysiloxan eingestellt.

Nach der vorliegenden Erfindung werden folgende Einzelkomponenten durch die Organopolysiloxan-Zusammensetzungen umfasst:

I. Organopolysiloxane der allgemeinen Formel:

$$R_2R'SiO(R_2SiO)_nSiR_2R'$$

worin R ein an Silicium gebundener, einwertiger linearer oder verzweigter substituierter oder nichtsubstituierter, keine aliphatisch ungesättigte Gruppen aufweisender Rest und R' ein einwertiger linearer oder verzweigter substituierter oder nichtsubstituierter, eine an Silicium gebundene aliphatisch ungesättigte Gruppe enthaltender Rest ist, und n eine ganze positive Zahl ist, die so bemessen ist, dass die Viskosität der Verbindung zwischen 50 und 100 000 mPa.s bei 25 °C liegt, bevorzugt bei 100–70 000 mPa.s bei 25 °C liegt.

II. Organopolysiloxane mit Struktureinheiter der allgemeinen Formel:

$$R_aH_bSiO\left(\frac{4-a-b}{2}\right)$$

worin R die vorstehend, bei Komponente I beschriebene Bedeutung hat, a einen Wert von 1,00–2,00, b einen Wert von 0,1–1,0 und die Summe von a + b etwa 1,5–3,0 beträgt, wobei mindestens zwei an Silicium gebundene Wasserstoffatome je Molekül vorliegen, und

III. ein Platin-Katalysator.

Der oben angegebene Bestandteil der allgemeinen Formel I ist ein lineares Organopolysiloxan, dessen Molekülkette endständige, an Silicium gebundene ungesättigte Gruppen aufweist.

Zu den Resten R gehören Alkylreste, wie z. B. Methyl, Äthyl, Propyl, Isopropyl, Butyl, Octyl jeweils in verzweigter oder nichtverzweigter Form; Cycloalkyl, wie z. B. Cyclopentyl, Cyclohexyl; Aryl, wie z. B. Phenyl, Naphthyl, Tolyl und Xylol; Aralkyl, wie z. B. Benzyl, Phenyläthyl, sowie halogensubstituierte Derivate der vorgenannten Reste, wie z. B. Chlor-methyl, Chloräthyl, Chlorpropyl, Bromphenyl u. ä. Vorzugsweise sind mindestens 75% der vorhandenen Reste R Methylreste und die verbleibenden Reste Phenylreste. Besonders bevorzugt sind Verbindungen der allgemeinen Formel I, in denen R für den Methylrest steht. Verbindungen gemäss der allgemeinen Formel I können in einem Molekül auch verschiedene der o. a. Reste enthalten.

Zu den Resten R' der allgemeinen Formel I gehören Alkenylreste, wie Vinyl, Allyl, Butenyl und Alkinylreste, wie Äthinyl, Propinyl und Butinyl. Vorzugsweise steht R' für den Vinyl- oder Allylrest und besonders bevorzugt für den Vinylrest.

Bei den Organopolysiloxanen der allgemeinen Formel II handelt es sich um Organosilicium-Verbindungen, die siliciumgebundene Wasserstoffatome enthält. In einem Molekül des Bestandteiles II müssen jedoch wenigstens 2 siliciumgebundene Wasserstoffatome vorhanden sein. Der Rest R entspricht der unter Bestandteil I gegebenen Definition. Die organischen Reste R können dabei gleich oder verschieden sein. Bei Bestandteil II kann es sich um ein Homopolymer, ein Copolymer oder ein Gemisch aus 2 oder mehr solcher Verbindungen handeln. Besonders bevorzugt im Rahmen der vorliegenden Erfindung sind Organohydrogenpolysiloxane der allgemeinen Formel

$$R_{3-x}H_xSiO(SiH_yR_zO)_nR_{3-x}H_x$$

wobei x einen Wert von 0 oder 1 besitzt, y einen durchschnittlichen Wert von 0–0,8, bevorzugt von 0,3–0,8 und z einen solchen von 1,2–2,0 aufweist, die Summe von x + y nicht kleiner als 1 und die Summe von y + z nicht grösser als 2 ist. Die Zahl n besitzt einen solchen Wert, dass die Viskosität des betreffenden Organohydrogenpolysiloxans zwischen ca. 3 und 1000, bevorzugt 5 und 100 mPa.s bei 25°C liegt. Diese Angaben stellen keine Einschränkungen im Sinne der vorliegenden Erfindung dar, sondern alle Verbindungen gemäss der allgemeinen Formel II sind geeignet.

Als Bestandteil III wird ein Platin-Katalysator verwendet, der die zwischen der $Si{-}CH{=}CH_2$-Bindung und der Si-H-Bindung stattfindende Additionsreaktion katalysiert, z. B. feinverteiltes elementares Platin, Hexachloroplatinsäure oder Komplexe von Platin-Verbindungen mit Olefinen. Vorzugsweise wird eine Lösung von $Pt(CO)_2Cl_2$ in Tetramethyltetravinylcyclotetrasiloxan verwendet. Besonders bevorzugt werden solche Platin-Katalysatoren verwendet, die in den Organopolysiloxanen, den Bestandteilen der erfindungsgemässen Mischung, löslich sind. Solche Platin-Katalysatoren sind Stand der Technik und z. B. in US 3 220 972, US 3 715 334, US 3 159 601 oder DE-OS 2 251 297 beschrieben. Die zugesetzte Katalysator-Menge beträgt im allgemeinen 0,1 bis 100, vorzugsweise 0,2–50, besonders bevorzugt 0,5–20 ppm Platin, bezogen auf das Gesamtgewicht der in den Mischungen enthaltenen Organopolysiloxan-Bestandteile. Ganz besonders bevorzugt werden erfindungsgemäss nur 0,7 bis 5 ppm Platin verwendet. Zusätzlich können die Mischungen Inhibitorensubstanzen enthalten, welche die Aktivität der zugesetzten Platin-Verbindungen bei Raumtemperatur oder leicht erhöhter Temperatur vermindern, hingegen bei hoher Temperatur im Bereich von 100°C und darüber keinen Einfluss auf die Aktivität der Platin-Verbindungen ausüben. Beispiele für Inhibitoren sind Benzotriazol, acetylenische Verbindungen oder auch stark komplexbildende Verbindungen, wie z. B. Acetylaceton.

Ein wesentliches Merkmal der vorliegenden Erfindung ist in der Wahl des Verhältnisses der in Komponente I vorhandenen aliphatisch ungesättigten Gruppen zu den in Komponente II vorhandenen, an Silicium gebundenen Wasserstoffatomen zu sehen. Das stöchiometrische Verhältnis von den in der Mischung vorhandenen aliphatisch ungesättigten Gruppen zu den an Silicium gebundenen Wasserstoffatomen kann aufgrund der Zusammensetzung der Komponenten I und II rechnerisch leicht ermittelt und so das gewichtsmässige Verhältnis der beiden Komponenten eingestellt werden. Das stöchiometrische bzw. gewichtsmässige Verhältnis von Komponente II ist bestimmend für die Endkonsistenz der fertigen Mischung.

Das nach der vorliegenden Erfindung gewählte stöchiometrische Verhältnis von aliphatisch ungesättigten Gruppen der Komponente I zu an Silicium gebundenen Wasserstoffatomen der Komponente II hat einen Wert von 1,1 bis 5,0, bevorzugt 1,5 bis 3,0. Das Verhältnis wird bei bekannter Zusammensetzung von Komponente I und Komponente II durch die gewichtsmässige Dosierung von Komponente I zu Komponente II eingestellt.

Verarbeitungs- und Reaktionszeit werden bei gegebener Zusammensetzung von Komponente I und Komponente II durch Art und Menge des als

Komponente III dienenden Platin-Katalysators, gegebenenfalls durch Zusatz einer geeigneten Inhibitorsubstanz, eingestellt. Üblicherweise liegt die Verarbeitungszeit bei 30 Minuten bis ca. 12 Stunden und die Reaktionszeit bei 120 Minuten bis 48 Stunden. Durch Wärmezufuhr kann die Reaktionszeit erheblich verkürzt werden. Die optische Durchlässigkeit sowohl der plattenformigen Materialien als auch der Zwischenschicht soll so hoch wie möglich sein, was jedoch nicht ausschliesst, dass eine Einfärbung und/oder oberflächliche Beschichtung der plattenförmigen Materialien und/oder der Zwischenschicht vorgenommen werden kann. Eine solche Einfärbung oder auch Trübung kann z. B. durch anorganische Pigmente, wie z. B. Russ, Titandioxyd, Eisenoxyde oder andere Schwermetalloxyde oder organische, farbige oder färbende Substanzen vorgenommen werden. Die Färbemittel dürfen jedoch mit der elastischen Zwischenschicht nicht reagieren.

Vorzugsweise werden bei der vorliegenden Erfindung optisch durchsichtige Substanzen für die plattenförmigen Materialien verwendet, wie z. B. Glas, Polymethacrylsäureester, Polycarbonate, Polyamide oder eine Kombination dieser Substanzen.

Die Zwischenschicht wird bei dem erfindungsgemässen Verfahren zwischen die einzelnen plattenförmigen Materialien eingebracht, indem die plattenförmigen Materialien in dem gewünschten Abstand arretiert und die die Zwischenschicht bildenden Materialien eingegossen, eingepresst oder eingesaugt werden.

Es ist jedoch auch möglich, auf eine Platte die erfindungsgemässe Zwischenschicht aufzutragen und dann eine zweite Platte mit einem solchen Druck aufzupressen, dass der gewünschte Abstand zu der ersten Platte erhalten wird, wobei das Organopolysiloxan den gewünschten Zwischenraum vollständig ausfüllt. Dieser Vorgang kann in analoger Weise wiederholt werden, wenn ein Schichtkörper bestehend aus mehr als zwei plattenförmigen Materialien hergestellt werden soll.

Die vorliegende Erfindung wird durch die folgenden Beispiele noch näher beschrieben. Alle angegebenen Teile sind Gewichtsteile, soweit nicht ausdrücklich etwas anderes festgestellt wird.

Beispiel 1

Zwei Glasscheiben von 2 mm Stärke und einer äusseren Abmessung von 50 × 50 cm wurden in einem Abstand von 1,5 mm parallel zueinander mit Hilfe eines äusseren Rahmens angeordnet. Eine Seite des Rahmens blieb offen.

In die offengebliebene Seite wurde eineMischung aus folgenden Einzelbestandteilen gegossen:

1000,0 Teile vinylendgestopptes Polydimethylsiloxan einer Viskosität von 1000 mPa.s bei 25° C

1,4 Teile eines Organohydrogenpolysiloxans der allgemeinen Formel

$$(CH_3)_3Si{-}O\left[\begin{matrix} H \\ | \\ Si{-}O \\ | \\ CH_3 \end{matrix}\right]_n - \left[\begin{matrix} CH_3 \\ | \\ Si{-}O \\ | \\ CH_3 \end{matrix}\right]_m {-}Si(CH_3)_3$$

bei der n und m so bemessen sind, dass die Verbindung eine Viskosität von 11 mPa.s bei 25° C aufweist und einen Si-H-Gruppengehalt von 4,0 mmol/g hat

1 ppm Platin in Form eines Platin-Katalysators mit einem Platin-Gehalt von ca. 2 Gew.%.

Obenstehende Mischung liess sich bei 25° C ca. 60 Minuten verarbeiten (Potlife) und wurde vor dem Eingiessen zwischen die beiden Glasscheiben 10 Minuten bei 3 Torr einer Vakuumbehandlung unterworfen.

Nach 24 Stunden war die Mischung zu einer die Glasscheiben fest verbindenden gelartigen Masse vulkanisiert. Die Konsistenz der Masse und die Haftung zum Glas änderte sich bei längerer Lagerung und Wärme/Wechsel-Beanspruchung von –10° C auf +80° C nicht. Der Schichtkörper war optisch vollkommen klar und durchsichtig und änderte seine optische Eigenschaften bei Sonnen- oder UV-Bestrahlung nicht. Die Glasscheiben liessen sich ohne Zerstörung des Glases nicht mehr voneinander trennen. Bei gewaltsamer Zerstörung des Schichtkörpers durch Schlagbeanspruchung haftete das Glas an der Zwischenschicht aus Organopolysiloxan so fest, dass keine die Umgebung gefährdende Splitterwirkung auftrat.

Beispiel 2

2 Scheiben aus Polymethacrylsäureester von 3 mm Stärke und äusseren Abmessungen von 50 × 50 mm wurden in einem Abstand von 1 mm parallel zueinander angeordnet und mit der in Beispiel 1 beschriebenen Organopolysiloxan-Mischung vergossen. Nach vollständiger Reaktion hatte die Organopolysiloxan-Mischung zu einer die beiden Polymethacrylsäureester-Scheiben festverbindenden gelartigen Masse reagiert. Das optische Verhalten und das Verhalten bei Schlagbeanspruchung war ähnlich dem in Beispiel 1 beschriebenen Schichtkörper aus Glas. Bei längerer Lagerung, d. h. nach 60 Tagen, trat keine Loslösung der Zwischenschicht von den beiden Scheiben auf. Eine optische Veränderung oder Spannungsrisskorrosion war nicht zu beobachten.

Beispiel 3

Zwei Polycarbonatplatten einer Schichtdicke von 3 mm und äusseren Abmessungen von 50 × 50 mm wurden in einem Abstand von 1,5 mm parallel zueinander angeordnet und mit der in Beispiel 1 beschriebenen Organopolysiloxan-Mischung vergossen. Nach vollständiger Reaktion war die Organopolysiloxan-Mischung zu einer die Polycarbonatscheiben festverbindenden gelartigen Masse vulkanisiert. Der Schichtkörper hielt einer starken Schlagbeanspruchung nach DIN 52306 stand, ohne dass eine Loslösung der Zwischenschicht auftrat. Optisches und mechanisches Verhalten änderten sich bei einer Lagerung über 8 Wochen nicht.

Beispiel 4

Wie in Beispiel 1 beschrieben, wurden Schichtkörper durch Kombination der in den vorhergehenden Beispielen genannten Werkstoffe hergestellt. Es wurden Schichtkörper aus Polycarbonat/Polymethacrylsäureester und Polymethacrylsäureester/Glas hergestellt. Auch hier zeigte sich die beiderseitig gute Haftung der Organopolysiloxan-Mischung. Die durchgeführten Schlagversuche erbrachten die gleichguten, in den vorstehenden Beispielen schon beschriebenen Ergebnisse.

Beispiel 5

Gemäss Beispiel 3 wurde ein Schichtkörper aus Polycarbonatplatten mit einer Organopolysiloxan-Mischung folgender Zusammensetzung hergestellt:
100,0 Teile vinylendgestopptes Polydimethylsiloxan einer Viskosität von 1000 mPa.s bei 25° C
3,5 Teile des in Beispiel 1 beschriebenen Organohydrogenpolysiloxans
1 ppm Platin in Form des Platin-Katalysators Dicarbonyldichlorplatin (nach DE-OS 2 251 297) mit einem Platin-Gehalt von ca. 2 Gew.%.

Es wurde ein Schichtkörper erhalten, bei dem sich die beiden Scheiben schon bei leichter mechanischer Beanspruchung vollkommen von der Zwischenschicht lösen liessen.

Beispiel 6

In einem Holzrahmen wurde eine Polycarbonatscheibe von 3 mm Dicke und den äusseren Abmessungen 50 × 50 cm waagerecht angeordnet und eine Mischung aus folgenden Einzelbestandteilen in einer Schichtdicke von 1,0 mm auf die Scheibe aufgebracht:
100,0 Teile vinylendgestopptes Polydimethylsiloxan einer Viskosität von 65 000 mPa.s bei 25° C
0,2 Teile des in Beispiel 1 beschriebenen Organohydrogenpolysiloxans
2 ppm Platin des in Beispiel 1 beschriebenen Katalysators

Auf die Organopolysiloxan-Mischung wurde unter schrägem Ansetzen eine zweite Scheibe aus Polymethacrylsäureester aufgelegt. Der nach vollständiger Reaktion der Organopolysiloxan-Mischung erhaltene Schichtkörper hielt einer starken Schlagbeanspruchung nach DIN 52306 stand, ohne dass eine Loslösung der Zwischenschicht auftrat.

**Patentansprüche**

1. Optisch durchlässige Schichtkörper bestehend aus zwei oder mehreren Schichten, die durch eine oder mehrere Zwischenschichten aus Organopolysiloxanen verbunden sind, dadurch gekennzeichnet, dass die Zwischenschicht aus einem optisch durchlässigen und durch mit Platin katalysierter Additionsreaktion hergestelltem Organopolysiloxan besteht, wobei das Organopolysiloxan die folgenden Einzelkomponenten umfasst:

I. Organopolysiloxane der allgemeinen Formel:

$$R_2R'SiO(R_2SiO)_nSiR_2R'$$

worin R ein an Silicium gebundener einwertiger linearer oder verzweigter substituierter oder nichtsubstituierter, keine aliphatisch ungesättigte Gruppe aufweisender Rest ist, und R' ein einwertiger linearer oder verzweigter substituierter oder nichtsubstituierter, eine an Silicium gebundene, aliphatisch ungesättigte Gruppe enthaltender Rest ist, und n eine ganze positive Zahl ist, die so bemessen ist, dass die Viskosität der Verbindung zwischen 50 und 100 000 mPa.s, bevorzugt zwischen 100–70 000 mPa.s bei 25° C liegt.

II. Organopolysiloxane mit Struktureinheiten der allgemeinen Formel:

$$R_aH_bSiO\left(\frac{4-a-b}{2}\right)$$

worin R die vorstehend, bei Komponente I beschriebene Bedeutung hat, a einen Wert von 1,00–2,00, b einen Wert von 0,1–1,0 und die Summe von a+b etwa 1,5–3,0 beträgt, wobei mindestens zwei an Silicium gebundene Wasserstoffatome je Molekül vorliegen.

III. Einen oder mehrere Platin-Katalysatoren.

2. Schichtkörper gemäss Anspruch 1, dadurch gekennzeichnet, dass in dem Organopolysiloxan das Verhältnis der in Komponente I vorhandenen, an das Silicium gebundenen, aliphatisch ungesättigten Gruppen zu den in Komponente II vorhandenen, an Silicium gebundenen Wasserstoffatomen, auf die Stöchiometrie bezogen, einen Wert grösser als 1 besitzt.

3. Schichtkörper gemäss einem der Ansprüche 1 oder 2, dadurch gekennzeichnet, dass in dem Organopolysiloxan das Verhältnis der in Komponente I vorhandenen, an Silicium gebundenen, aliphatisch ungesättigten Gruppen zu den in Komponente II vorhandenen, an Silicium gebundenen Wasserstoffatomen, auf die Stöchiometrie bezogen, einen Wert von 1,1–5,0 aufweist.

4. Schichtkörper gemäss einem der Ansprüche 1 bis 3, dadurch gekennzeichnet, dass in dem Organopolysiloxan der Rest R' in Komponente I eine Vinylgruppe ist, die Reste R die Methylgruppe darstellen und die Verbindung eine Viskosität von 50 bis 100 000, bevorzugt 100 bis 70 000 mPa.s bei 25° C hat.

5. Schichtkörper gemäss einem der Ansprüche 1 bis 4, dadurch gekennzeichnet, dass in dem Organopolysiloxan die Komponente II der allgemeinen Formel

$$R_{3-x}H_xSiO(SiH_yR_zO)_nR_{3-x}H_x$$

entspricht, wobei x einen Wert von 0 oder 1, y einen durchschnittlichen Wert von 0–0,8, bevorzugt 0,3–0,8, und z einen Wert von 1,2–2,0 aufweisen; die Summe von x + y nicht kleiner als 1, die Summe von y + z nicht grösser als 2 ist und die Zahl n einen solchen Wert besitzt, dass die Viskosität des betreffenden Organohydrogenpolysiloxans zwischen 3 und 1000, bevorzugt 5 und 100 mPa.s bei 25° C liegt.

6. Schichtkörper gemäss einem der Ansprüche 1 bis 5, dadurch gekennzeichnet, dass die Platinverbindung (Komponente III) in der Mischung aus Komponente I und Komponente II löslich ist.

7. Schichtkörper gemäss einem der Ansprüche 1 bis 6, dadurch gekennzeichnet, dass die Platinverbindung (Komponente III) eine Lösung von $Pt(CO)_2Cl_2$ in Tetramethyltetravinylcyclotetrasiloxan ist.

8. Verfahren zur Herstellung von Schichtkörpern gemäss einem der vorstehenden Ansprüche, dadurch gekennzeichnet, dass das Organopolysiloxan in den Zwischenraum zwischen mindestens zwei optisch durchlässigen Materialien entweder eingepresst, eingesaugt oder eingegossen wird oder jeweils auf eine Seite der plattenförmigen Materialien aufgebracht wird, worauf die Platten gleichzeitig oder bei mehr als zwei Platten auch nacheinander so stark aufeinandergepresst werden, dass der gewünschte Abstand eingestellt wird und das Polysiloxan den eingestellten Zwischenraum vollständig ausfüllt.

**Claims**

1. Optically transmitting laminates consisting of two or more laminae which are bonded by one or more intermediate layers of organopolysiloxanes, characterised in that the intermediate layer consists of an optically transmitting organopolysiloxane prepared by a platinum-catalysed addition reaction, the organopolysiloxane comprising the following individual components:

I. Organopolysiloxanes of the general formula:

$$R_2R'SiO(R_2SiO)_nSiR_2R'$$

wherein

R is a monovalent, linear or branched, substituted or unsubstituted radical which is bonded to silicon and contains no aliphatically unsaturated groups, and

R' is a monovalent, linear or branched, substituted or unsubstituted radical containing an aliphatically unsaturated group bonded to silicon and

n is a positive integer of a value such that the viscosity of the compound is between 50 and 100,000 mPa's, preferably 100–70,000 mPa's.

II. Organopolysiloxanes containing structural units of the general formula:

$$R_aH_bSiO(\frac{4-a-b}{2})$$

wherein

R has the meaning described above for component I.

a has a value of 1.00–2.00,

b has a value of 0.1–1.0 and

the sum of a + b is about 1.5–3.0,

at least 2 hydrogen atoms bonded to silicon being present per molecule.

III. One or more platinum catalysts.

2. Laminates according to claim 1, characterised in that in the organopolysiloxane the ratio of the silicon-bonded, aliphatically unsaturated groups present in component I to the silicon-bonded hydrogen atoms present in component II, in relation to the stoichiometry has a value greater than 1.

3. Laminates according to one of claims 1 or 2, characterised in that in the organopolysiloxane the ratio of the siliconbonded, aliphatically unsaturated groups present in component I to the silicon-bonded hydrogen atoms present in component II, in relation to the stoichiometry has a value of 1.1–5.0.

4. Laminates according to one of claims 1 to 3, characterised in that in the organopolysiloxane the radical R' in component I is a vinyl group, the radicals R represent the methyl group and the compound has a viscosity of 50 to 100,000, preferably 100 to 70,000 mPa's.

5. Laminates according to one of claims 1 to 4, characterised in that in the organopolysiloxane the component II corresponds to the general formula

$$R_{3-x}H_xSiO(SiH_yR_zO)_nR_{3-x}H_x$$

wherein

x has a value of 0 or 1,

y has an average value of 0–0.8, preferably 0.3–0.8 and

z has a value of 1.2–1.0;

the sum of x + y is not less than 1,

the sum of y + z is not greater than 2 and

the number n has a valuesuch that the viscosity of the organohydridopolysiloxane concerned is between 3 and 1000, preferably 5 and 100 mPa's at 25° C.

6. Laminates according to one of claims 1 to 5, characterised in that the platinum compound (component III) is soluble in the mixture of component I and component II.

7. Laminates according to one of claims 1 to 6, characterised in that the platinum compound (component III) is a solution of $Pt(CO)_2Cl_2$ in tetramethyltetravinylcyclotetrasiloxane.

8. Process for the production of laminates according to one of the preceding claims, characterised in that the organopolysiloxane is either forced, sucked or poured into the interspace between at least two optically transmitting materials or is applied in each case to one side of the sheet-like materials, after which the sheets are simultaneously, or in the case of more than two sheets also successively, pressed together so strongly that the desired distance is adjusted and

the polysiloxane completely fills the adjusted interspace.

**Revendications**

1. Corps stratifiés optiquement transparents qui sont collés par une ou plusieurs couches intermédiaires d'organopolysiloxannes, caractérisés en ce que la couche intermédiaire consiste en un organopolysiloxanne optiquement transparent et préparé par réaction d'addition catalysée par le platine, l'organopolysiloxanne comprenant les composants individuels suivants

I. Des organopolysiloxannes de formule générale

$$R_2R'SiO(R_2SiO)_nSiR_2R'$$

dans laquelle R est un reste monovalent linéaire ou ramifié, substitué ou non, lié au silicium, ne présentant pas de groupes insaturés aliphatiques et R' est un groupe monovalent linéaire ou ramifié, substitué ou non, contenant un groupe insaturé aliphatique lié au silicium, et n est un nombre entier positif, qui est mesuré de telle sorte que la viscosité du composé soit comprise entre 50 et 1 000.000 mPa.s à 25° C, de préférence de 100 à 70.000 mPa.s à 25° C.

II. Des organopolysiloxannes ayant des motifs de structure de formule générale

$$R_aH_bSiO\left(\frac{4-a-b}{2}\right)$$

dans laquelle R a la signification décrite précédemment pour le composant I, a est une valeur de 1,00–2,00, b une valeur de 0,1–1,0 et la somme a + b est d'environ 1,5–3,0, chaque molécule contenant au moins deux atomes d'hydrogène liés au silicium et

III. Un catalyseur au platine.

2. Corps stratifiés selon la revendication 1, caractérisés en ce que, dans l'organopolysiloxanne, le rapport des groupes insaturés aliphatiques liés au silicium présents dans le composant I aux atomes d'hydrogène liés au silicium présents dans le composant II a une valeur supérieure à 1, par rapport au rapport stoechiométrique.

3. Corps stratifiés selon l'une des revendications 1 ou 2, caractérisés en ce que, dans l'organopolysiloxanne, le rapport des groupes insaturés aliphatiques liés au silicium présents dans le composant I aux atomes d'hydrogène liés au silicium présents dans le composant II a une valeur de 1,1–5,0, par rapport au rapport stoechiométrique.

4. Corps stratifiés selon l'une des revendications 1 à 3, caractérisés en ce que, dans l'organopolysiloxanne, le reste R' dans le composant I est un groupe vinyle, le reste R représente le groupe méthyle et le composé a une viscosité de 50 à 100.000, de préférence 100 à 70.000 mPa.s.

5. Corps stratifiés selon l'une des revendications 1 à 4, caractérisés en ce que, dans l'organopolysiloxanne, le composant II correspond à la formule générale

$$R_{3-x}H_xSiO(SiH_yR_zO)_nR_{3-x}H_x$$

dans laquelle x a une valeur de 0 ou 1, y a une valeur moyenne de 0–0,8, de préférence de 0,3 à 0,8 et z a une valeur de 1,2–2,0, la somme x + y n'étant pas inférieure à 1 et la somme y + z n'étant pas supérieure à 2, et le nombre n a une valeur telle que la viscosité à 25°C de l'organohydrogénopolysiloxanne considéré soit d'environ 3 à 1.000, de préférence entre 5 et 100 mPa.s.

6. Corps stratifiés selon l'une des revendications 1 à 5, caractérisés en ce que le composé de platine (composant III) est soluble dans le mélange du composant I et du composant II.

7. Corps stratifiés selon l'une des revendications 1 à 6, caractérisés en ce que le composé de platine (composant III) est une solution de $Pt(CO)_2Cl_2$ dans le tétraméthyltétravinylcyclotétrasiloxanne.

8. Procédé pour la préparation de corps stratifiés selon l'une des revendications précédentes, caractérisé en ce que l'organopolysiloxanne est injecté, aspiré ou coulé dans l'intervalle entre au moins deux matériaux optiquement transparents, ou bien on la dépose sur une face des matériaux en plaque et on presse les plaques simultanément, ou bien l'une après l'autre dans le cas de plus de deux plaques, sous une pression telle que la distance désirée soit ajustée et que le polysiloxanne remplisse complètement l'intervalle réglé.